# EUROPEAN PATENT APPLICATION

(11) **EP 3 418 524 A1**
(43) Date of publication of application: **26.12.2018**
(21) Application number: 18174498.8
(22) Date of filing: 28.05.2018
(51) Int. Cl.: F01N 5/02, F01K 15/04, F02G 5/04, F02G 5/02

(54) **WASTE HEAT RECOVERY SYSTEM**

(30) Priority: 22.06.2017 JP 2017122012
(71) Applicant: Kabushiki Kaisha Kobe Seiko Sho (Kobe Steel, Ltd.), Kobe-shi, Hyogo, 651-8585 (JP)
(72) Inventor: ADACHI, Shigeto, Takasago-shi,, Hyogo 676-8670 (JP)
(74) Representative: TBK

(57) **Abstract**

Provided is a thermal energy recovery device enabling recovery of thermal energy of exhaust gas exhausted from an internal combustion engine, and smooth exhaustion of the exhaust gas to an outside. The thermal energy recovery device includes an economizer connected to an exhaust gas pathway through which the exhaust gas exhausted from the internal combustion engine flows and a heat medium pathway through which a heat medium flows, and heating the heat medium through heat exchange between the exhaust gas flowing into from the exhaust gas pathway and the heat medium flowing into from the heat medium pathway, a thermal energy recovery unit connected to the heat medium pathway, and recovering thermal energy of the heat medium heated by the economizer, and a blowing machine mechanism arranged in the exhaust gas pathway, and pressurizing the exhaust gas flowing through the exhaust gas pathway.

## Description

### BACKGROUND OF THE INVENTION

### FIELD OF THE INVENTION

The present invention relates to a thermal energy recovery device.

### DESCRIPTION OF THE RELATED ART

Hitherto, there is known a thermal energy recovery device for recovering thermal energy of exhaust gas exhausted from an internal combustion engine as disclosed in JP 2016-200048A. This thermal energy recovery device includes a heater, an expander, a generator, a condenser, a circulating pump, and a pipe for connecting these devices with one another, and constitutes an organic Rankine cycle for circulating a working medium having a low boiling point to the respective devices via the pipe. Then, vapor generated by using heat of the exhaust gas in an exhaust gas economizer is caused to flow into the heater, the working medium is heated by the vapor in the heater, and a rotor of the generator is rotated by the evaporated working medium, thereby recovering thermal energy of the exhaust gas as electric energy.

In JP 2016-200048A, the exhaust gas exhausted from the internal combustion engine passes a turbine of a supercharger and the exhaust gas economizer in this sequence, and is then exhausted to an outside. On this occasion, while the vapor can be generated through the heat of the exhaust gas in the exhaust gas economizer, a pressure loss of the exhaust gas increases upon the passage through the exhaust gas economizer. As a result, the smooth exhaustion of the exhaust gas to the outside may be difficult.

### SUMMARY OF INVENTION

The present invention has been made in view of the above-mentioned problem, and therefore has an object to provide a thermal energy recovery device enabling recovery of thermal energy of exhaust gas exhausted from an internal combustion engine, and smooth exhaustion of the exhaust gas to an outside.

A thermal energy recovery device according to one aspect of the present invention is a device for recovering thermal energy of exhaust gas exhausted from an internal combustion engine. The thermal energy recovery device includes an economizer that is connected to an exhaust gas pathway through which the exhaust gas flows and a heat medium pathway through which a heat medium flows, and heats the heat medium through heat exchange between the exhaust gas flowing into from the exhaust gas pathway and the heat medium flowing into from the heat medium pathway, a thermal energy recovery unit that is connected to the heat medium pathway, and recovers thermal energy of the heat medium heated by the economizer, and a blowing machine mechanism that is arranged in the exhaust gas pathway, and pressurizes the exhaust gas flowing through the exhaust gas pathway.

With this thermal energy recovery device, the heat medium is heated through the heat exchange with the exhaust gas in the economizer, and the thermal energy of the heated heat medium is recovered in the thermal energy recovery unit, thereby enabling recovery of the thermal energy of the exhaust gas exhausted from the internal combustion engine. On this occasion, when the exhaust gas exhausted from the internal combustion engine passes through the economizer, the pressure loss of the exhaust gas may increase. To address this problem, the thermal energy recovery device can pressurize the exhaust gas by the blowing machine mechanism arranged in the exhaust gas pathway, and the pressure loss of the exhaust gas generated upon the passage through the economizer can thus be compensated. Thus, with this thermal energy recovery device, the thermal energy of the exhaust gas exhausted from the internal combustion engine can be recovered, and the exhaust gas can smoothly be exhausted to the outside.

In the above-mentioned energy recovery device, the thermal energy recovery unit may include a heater that heats a working medium through heat exchange between the heat medium heated by the economizer and the working medium, and a recovery machine, that recovers energy of the working medium in a vapor state heated by the heater as electric energy. This thermal energy recovery device may be configured so that the electric energy recovered by the recovery machine is used as driving energy for the blowing machine mechanism.

With this configuration, power supplied from another power supply to the blowing machine mechanism can be decreased more by using the electric energy generated by using the thermal energy of the exhaust gas to drive the blowing machine mechanism.

In the above-mentioned thermal energy recovery device, the blowing machine mechanism may be arranged on a downstream side with respect to the economizer in a flow direction of the exhaust gas.

With this configuration, the exhaust gas that has previously been provided for the heat exchange in the economizer passes through the blowing machine mechanism, heat damage of the blowing machine mechanism can be decreased more compared with a case in which the exhaust gas at a high temperature immediately after the exhaustion from the internal combustion engine passes through the blowing machine mechanism.

In the above-mentioned thermal energy recovery device, the economizer may include a shell that includes a space through which the exhaust gas passes and a tube that is arranged in the space, and through which the heat medium flows. The economizer may be connected to the exhaust gas pathway so that an inner surface of the shell defining the space flushes with an inner surface of the exhaust gas pathway.

With this configuration, the exhaust gas can be caused to smoothly flow at a connection portion between the economizer and the exhaust gas pathway, and a pressure loss of the exhaust gas at this connection portion can thus be decreased.

In the above-mentioned energy recovery device, multiple blowing machine mechanisms may be arranged.

With this configuration, the multiple blowing machine mechanisms can be used to pressurize the exhaust gas, to thereby more surely compensate the pressure loss generated upon the passage through the economizer.

In the above-mentioned thermal energy recovery device, multiple blowing machine mechanisms may be arranged side by side in a widthwise direction of the exhaust gas pathway.

With this configuration, even if a width of the exhaust gas pathway is large, the exhaust gas can surely be pressurized by using the multiple blowing machine mechanisms arranged in the widthwise direction of the exhaust gas pathway.

In the above-mentioned thermal energy recovery device, the multiple economizers may be arranged in series in a flow direction of the exhaust gas.

With this configuration, the thermal energy of the exhaust gas exhausted from the internal combustion engine can highly efficiently be recovered by using the multiple economizers. Moreover, the serial arrangement of the multiple economizers is advantageous also in terms of space efficiency.

In the above-mentioned thermal energy recovery device, the exhaust gas pathway may branch into multiple pathways. The economizer may be arranged in each of the multiple pathways.

With this configuration, a pressure loss of the exhaust gas can be decreased more by arranging the multiple economizers in parallel compared with a case of the serial arrangement.

In the above-mentioned thermal energy recovery device, the exhaust gas may be exhausted when any one of fuel oil A prescribed in JIS K 2205 and fuel oil C prescribed in JIS K 2205 and refined to a state in which a sulfur component is equal to or less than 2.0 mass% is combusted as a fuel in the internal combustion engine. In this thermal energy recovery device, the temperature of the exhaust gas flowing out from the economizer may be lower than 130°C.

When the fuel oil A containing the sulfur component equal to or less than 2.0 mass% or the fuel oil C refined to the state in which the sulfur component is equal to or less than 2.0 mass% is used as the fuel, the sulfuric acid dew point of the exhaust gas exhausted from the internal combustion engine decreases. Therefore, even when the temperature of the exhaust gas flowing out from the economizer is decreased to a temperature less than 130°C, such a problem that the exhaust gas is liquefied, and pipes and chimneys in the exhaust gas pathway are corroded can be avoided.

### Effect of the Invention

As apparent from the description given above, the present invention can provide a thermal energy recovery device enabling the recovery of the thermal energy of the exhaust gas exhausted from an internal combustion engine, and the smooth exhaustion of the exhaust gas to the outside.

### BRIEF DESCRIPTION OF THE DRAWINGS

FIG. 1 is a schematic view of a configuration of a thermal energy recovery device according to a first embodiment of the present invention.
FIG. 2 is a detailed view of a configuration of connection portions between economizers and an exhaust gas pathway in a region II in FIG. 1.
FIG. 3 is a schematic view of a configuration of a thermal energy recovery device according to a second embodiment of the present invention.
FIG. 4 is a schematic diagram of an arrangement of blowing machine mechanisms in a variation of the second embodiment.
FIG. 5 is a schematic view of a configuration of a thermal energy recovery device according to a third embodiment of the present invention.
FIG. 6 is a schematic view for showing a thermal energy recovery device according to another embodiment of the present invention.

### DESCRIPTION OF THE PREFERRED EMBODIMENTS

Hereinafter, a thermal energy recovery device according to embodiments of the present invention will be described in detail with reference to drawings.

### (First embodiment)

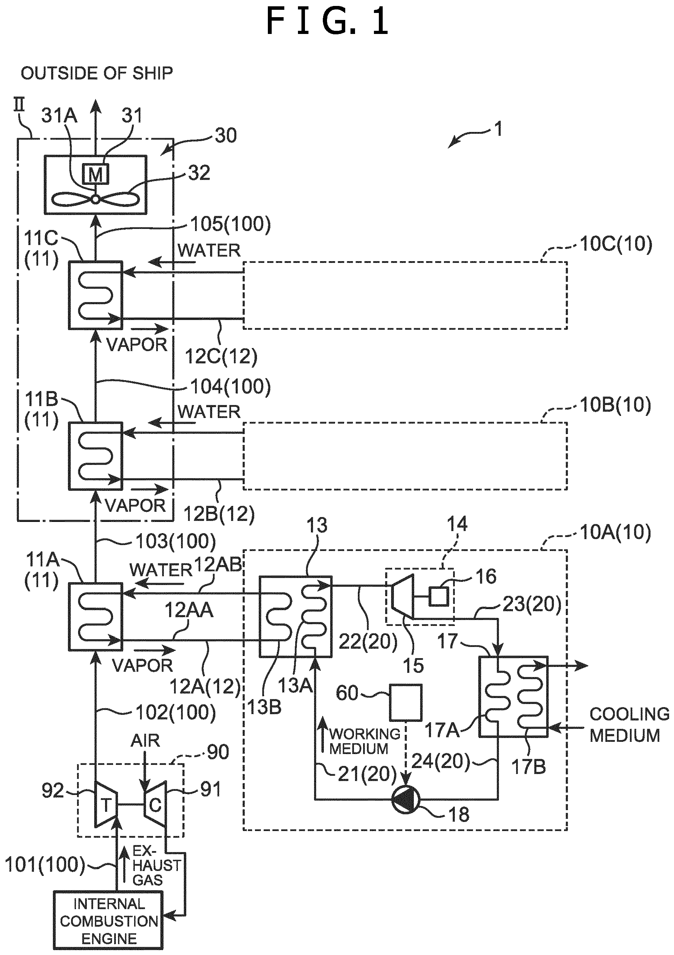

First, a description will now be given of the thermal energy recovery device 1 according to a first embodiment of the present invention mainly with reference to FIG. 1. FIG. 1 schematically shows a configuration of the thermal energy recovery device 1 according to the first embodiment.

The thermal energy recovery device 1 is a device installed in a ship, for example, and recovers thermal energy of exhaust gas exhausted from an internal combustion engine for ship propulsion. The internal combustion engine (diesel engine) for the ship propulsion, an exhaust gas pathway 100 through which the exhaust gas exhausted from the internal combustion engine flows, and a supercharger 90 are arranged in the ship as shown in FIG. 1. The exhaust gas exhausted from the internal combustion engine is exhausted via the exhaust gas pathway 100 to an outside of the ship. The supercharger 90 is a turbocharger, and includes a turbine 92 that receives the flow of the exhaust gas, thereby being rotated, and a compressor 91 that is driven through the rotation of the turbine 92. The compressor 91 compresses the air taken from the outside, and feeds the compressed air to the internal combustion engine. The internal combustion engine combusts fuel oil A (JIS K 2205 1991) or fuel oil C (JIS K 2205 1991) refined to a state in which a sulfur component is equal to or less than 2.0 mass% as a fuel in this embodiment. It should be noted that the fuel for the internal combustion engine is not limited to this case, and may be the fuel oil C before the refinement or the liquefied natural gas (LNG), for example, according to the present invention.

The thermal energy recovery device 1 mainly includes multiple economizers 11 (first economizer 11A, second economizer 11B, and third economizer 11C), multiple thermal energy recovery units 10 (first thermal energy recovery unit 10A, second thermal energy recovery unit 10B, and third thermal energy recovery unit 10C), and a blowing machine mechanism 30. The multiple economizers 11 are arranged in series in a flow direction of the exhaust gas (from an upstream side toward a downstream side of the exhaust gas pathway 100) as shown in FIG. 1 in this embodiment. The thermal energy recovery units 10 are provided as many as the number of the economizers 11 (three in this embodiment).

Multiple heat medium pathways 12 (first heat medium pathway 12A, second heat medium pathway 12B, and third heat medium pathway 12C) through which a heat medium such as water flows are provided in the ship. The first heat medium pathway 12A is connected to the first economizer 11A and the first thermal energy recovery unit 10A, and circulates the heat medium between the first economizer 11A and the first thermal energy recovery unit 10A as shown in FIG. 1. The first heat medium pathway 12A includes a feed side pathway 12AA for feeding the heat medium from the first economizer 11A to the first thermal energy recovery unit 10A and a return side pathway 12AB for returning the heat medium from the first thermal energy recovery unit 10A to the first economizer 11A. Similarly, the second heat medium pathway 12B is connected to the second economizer 11B and the second thermal energy recovery unit 10B, and circulates the heat medium between the second economizer 11B and the second thermal energy recovery unit 10B. Moreover, the third heat medium pathway 12C is connected to the third economizer 11C and the third thermal energy recovery unit 10C, and circulates the heat medium between the third economizer 11C and the third thermal energy recovery unit 10C.

The economizer 11 is a heat exchanger that heats the water (heat medium) through heat exchange between the exhaust gas exhausted from the internal combustion engine and the water, to thereby generate vapor or hot water. The economizer 11 is connected to the exhaust gas pathway 100 and the heat medium pathway 12.

The exhaust gas pathway 100 includes a first exhaust gas pathway 101 that leads the exhaust gas from the internal combustion engine to the turbine 92 of the supercharger 90, a second exhaust gas pathway 102 that leads the exhaust gas from the turbine 92 to the first economizer 11A, a third exhaust gas pathway 103 that leads the exhaust gas from the first economizer 11A to the second economizer 11B, a fourth exhaust gas pathway 104 that leads the exhaust gas from the second economizer 11B to the third economizer 11C, and a fifth exhaust gas pathway 105 that leads the exhaust gas from the third economizer 11C to the outside of the ship as shown in FIG. 1.

The second exhaust gas pathway 102 is connected to one end side of the first economizer 11A, and the third exhaust gas pathway 103 is connected to the other end side thereof. The third exhaust gas pathway 103 is connected to one end side of the second economizer 11B, and the fourth exhaust gas pathway 104 is connected to the other end side thereof. The fourth exhaust gas pathway 104 is connected to one end side of the third economizer 11C, and the fifth exhaust gas pathway 105 is connected to the other end side thereof. As a result, the exhaust gas exhausted from the internal combustion engine can be passed through the turbine 92 of the supercharger 90, can then be passed sequentially through the first to third economizers 11A, 11B, and 11C, and can then be exhausted to the outside of the ship. Then, the heat exchange can be carried out between the exhaust gas flowing from the exhaust gas pathway 100 and the water flowing from the heat medium pathway 12 in each of the economizers 11.

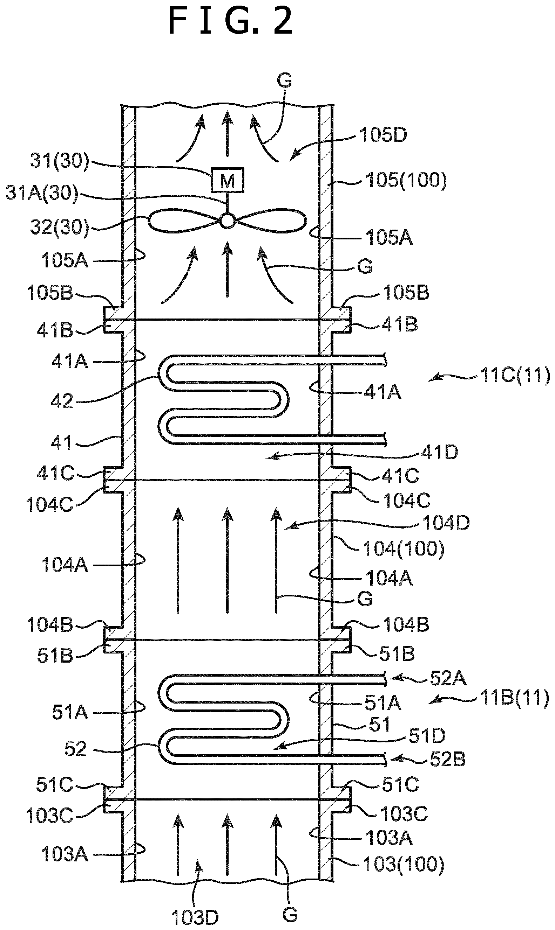

FIG. 2 shows a configuration of connection portions between the economizers 11 and the exhaust gas pathway 100 in a region II in FIG. 1. It should be noted that though a connection portion between the first economizer 11A and the exhaust gas pathway 100 is not shown in FIG. 2, the connection portion is configured as the connection portions between the second and third economizers 11B and 11C and the exhaust gas pathway 100.

The third exhaust gas pathway 103 is constructed of a tubular member in which a space 103D through which the exhaust gas G flows is provided as shown in FIG. 2. Similarly, the fourth and fifth exhaust gas pathways 104 and 105 are also constructed of tubular members in which spaces 104D and 105D through which the exhaust gas G flows are respectively provided.

A top end flange 104C and a bottom end flange 104B extending outward in a radial direction are respectively provided at a top end and a bottom end of the fourth exhaust gas pathway 104. Similarly, a top end flange 103C extending outward in the radial direction is also provided at a top end of the third exhaust gas pathway 103, and a bottom end flange 105B extending outward in the radial direction is also provided at a bottom end of the fifth exhaust gas pathway 105. It should be noted that though a bottom end flange is also provided at a bottom end of the third exhaust gas pathway 103, the bottom end flange is not shown in FIG. 2.

The second economizer 11B is, for example, a heat exchanger of a shell & tube type, and includes a shell 51 including a space 51D through which the exhaust gas G passes and a tube 52 (heat transfer pipe) in a meandering shape arranged in the space 51D. The space 51D of the shell 51 communicates with the space 103D of the third exhaust gas pathway 103 on the upstream side and the space 104D of the fourth exhaust gas pathway 104 on the downstream side. The tube 52 is a portion through which the water (heat medium) fed from the second heat medium pathway 12B flows, and includes a heat medium inlet 52A to which a return side pathway of the second heat medium pathway 12B is connected, and a heat medium outlet 52B to which a feed side pathway of the second heat medium pathway 12B is connected.

With the second economizer 11B, the heat exchange can be carried out between the exhaust gas flowing from the third exhaust gas pathway 103 into the space 51D of the shell 51 and the water flowing from the second heat medium pathway 12B (return side flow passage) into the tube 52. Then, vapor generated through the heat exchange with the exhaust gas can be fed via the feed side flow passage of the second heat medium pathway 12B to the second thermal energy recovery unit 10B.

The third economizer 11C is also formed of a heat exchanger of the shell & tube type as the second economizer 11B, and includes a shell 41 including a space 41D through which the exhaust gas G passes and a tube 42 that is provided in the space 41D, and through which the water (heat medium) flowing from the third heat medium pathway 12C flows. Moreover, the first economizer 11A is also formed of a heat exchanger of the shell & tube type configured as the second and third economizers 11B and 11C.

A top end flange 51B and a bottom end flange 51C extending outward in the radial direction are respectively provided at a top end and a bottom end of the shell 51 of the second economizer 11B. The shell 51 is fixed in a state in which the top end flange 51B is in contact with the bottom end flange 104B of the fourth exhaust gas pathway 104, and the bottom end flange 51C is in contact with the top end flange 103C of the third exhaust gas pathway 103 as shown in FIG. 2. Both of the flanges are fixed to each other through passing fasteners (not shown) such as bolts therethrough.

Similarly, a top end flange 41B and a bottom end flange 41C extending outward in the radial direction are also respectively provided at a top end and a bottom end of the shell 41 of the third economizer 11C. Then, the shell 41 is fixed in a state in which the top end flange 41B is in contact with the bottom end flange 105B of the fifth exhaust gas pathway 105, and the bottom end flange 41C is in contact with the top end flange 104C of the fourth exhaust gas pathway 104.

The second economizer 11B is connected respectively to the third and fourth exhaust gas pathways 103 and 104 so that an inner surface 51A of the shell 51 defining the space 51D flush with inner surfaces 103A and 104A of the third and fourth exhaust gas pathways 103 and 104 as shown in FIG. 2. In other words, a step is not formed in a connection portion between the inner surface 51A of the shell 51 and the inner surface 103A of the third exhaust gas pathway 103, and a step is not formed in a connection portion between the inner surface 51A of the shell 51 and the inner surface 104A of the fourth exhaust gas pathway 104. As a result, disturbance of the flow of the exhaust gas G is suppressed at the connection portions between the second economizer 11B and the third and fourth exhaust gas pathways 103 and 104, and a pressure loss of the exhaust gas G can consequently be suppressed. Similarly, the third economizer 11C is also connected respectively to the fourth and fifth exhaust gas pathways 104 and 105 so that an inner surface 41A of the shell 41 defining the space 41D flush with inner surfaces 104A and 105A of the fourth and fifth exhaust gas pathways 104 and 105.

It should be noted that the configuration is not limited to the case where the shell inner surface of the economizer 11 and the inner surface of the exhaust gas pathway 100 flush with each other as in this embodiment, a step may be formed at the connection portion between the shell inner surface of the economizer 11 and the inner surface of the exhaust gas pathway 100.

The temperature of the exhaust gas is two hundred some tens of degrees at an exit of the turbine 92 of the supercharger 90, and decreases below 130°C (such as approximately 100°C) at an exit of the third economizer 11C in this embodiment. On this occasion, if fuel oil C or the like containing a high sulfur component is used as the fuel for the internal combustion engine, and the temperature of the exhaust gas decreases below 130°C, the exhaust gas is liquefied, which poses a problem of corrosion of tubular members (pipes and chimneys) constructing the exhaust gas pathway 100. In contrast, the fuel oil A or the refined fuel oil C is used as the fuel for the internal combustion engine in this embodiment, and the sulfuric acid dew point of the exhaust gas is decreased more. Therefore, even if the temperature of the exhaust gas is decreased below 130°C at the exit of the third economizer 11C, the above-mentioned problem of the corrosion can be avoided.

The thermal energy recovery unit 10 is a unit that is connected to the heat medium pathway 12, and recovers the thermal energy of the heat medium (vapor) heated by the economizer 11 as shown in FIG. 1. The first to third thermal energy recovery units 10A, 10B, and 10C respectively have the same configuration in this embodiment. A description is herein only given of the configuration of the first thermal energy recovery unit 10A, and a description of the second and third thermal energy recovery units 10B and 10C are omitted.

The first thermal energy recovery unit 10A includes a circulating pump 18, a heater 13, a generation device 14 including an expander 15 and a generator 16, a condenser 17, and a circulation pathway 20 that sequentially connects these devices, and through which a working medium having a low boiling point circulates as shown in FIG. 1. An organic Rankine cycle is constructed by these components.

The circulation pathway 20 is configured to cause the working medium discharged from the circulating pump 18 to be sucked again by the circulating pump 18 after sequentially routing through the respective devices including the heater 13, the expander 15, and the condenser 17, and is constructed of the first to fourth pipes 21 to 24 in this embodiment. Though a fluorocarbon-based medium such as R245fa may be used as the working medium, the working medium is not limited thereto.

The first pipe 21 connects a discharge opening of the circulating pump 18 and an inlet for the working medium in the heater 13. The second pipe 22 connects an outlet for the working medium in the heater 13 and the expander 15. The third pipe 23 connects the expander 15 and an inlet for the working medium in the condenser 17. The fourth pipe 24 connects an outlet for the working medium in the condenser 17 and a suction opening of the circulating pump 18.

The circulating pump 18 is, for example, an electric pump, pressurizes the working medium, and supplies the pressurized working medium via the first pipe 21 to the heater 13. An operation of the circulating pump 18 is controlled by a control unit 60.

The heater 13 carries out heat exchange between the heat medium (vapor) heated by the first economizer 11A and the working medium fed by the circulating pump 18, to thereby heat the working medium. The heater 13 includes a first flow passage 13A through which the working medium fed from the circulating pump 18 flows and a second flow passage 13B through which the vapor flowing from the feed side pathway12AA flows. The heater 13 carries out the heat exchange between the working medium flowing through the first flow passage 13A and the vapor flowing through the second flow passage 13B. As a result, the working medium is heated by the vapor, and is evaporated. In other words, the heater 13 functions as an evaporator that evaporates the working medium through the heat exchange with the vapor in this embodiment. It should be noted that the vapor after the heat exchange with the working medium (or water generated through condensation of the vapor as a result of the heat exchange) in the heater 13 returns via the return side pathway 12AB to the first economizer 11A.

The generation device 14 includes a turbine 15 of a screw type, which is the expander, and the generator 16 connected to the turbine 15, and has such a configuration that the turbine 15 and the generator 16 are stored in a common housing (not shown). The turbine 15 carries out rotational drive through a difference between a pressure of the working medium flowing via the second pipe 22 from the heater 13 and a pressure of the working medium flowing via the third pipe 23 toward the condenser 17. The generator 16 functions as a recovery machine that generates electricity through the rotation of the turbine 15, to thereby recover energy of the working medium, which is heated by the heater 13, and is thus in the vapor state, as electric energy. It should be noted that the recovery machine is not limited to the generator 16. Moreover, a turbine of a displacement type such as scroll type, and a turbine of a non-displacement type such as a gas turbine of a centrifugal type may be used as the turbine 15.

The condenser 17 includes a first flow passage 17A through which the working medium fed from the expander 15 flows and a second flow passage 17B through which a cooling medium such as cooling water flows. The cooling water is supplied by a cooling water circulating pump or the like from a cooling water source such as a cooling tower (not shown) to the second flow passage 17B. The condenser 17 carries out the heat exchange between the working medium flowing through the first flow passage 17A and the cooling medium flowing through the second flow passage 17B. As a result, the working medium is cooled by the cooling medium, and condensed.

A description will now be given of the blowing machine mechanism 30, which is an important component in the thermal energy recovery device 1. The blowing machine mechanism 30 is arranged in the fifth exhaust gas pathway 105 in this embodiment as shown in FIG. 1. In other words, the blowing machine mechanism 30 is on a downstream side with respect to the third economizer 11C (economizer 11 positioned most downstream) in the flow direction of the exhaust gas. It should be noted that the position of the blowing machine mechanism 30 is not limited to this case, and the blowing machine mechanism 30 may be arranged in the third exhaust gas pathway 103 or the fourth exhaust gas pathway 104 (between the companion economizers 11) or may be arranged in the second exhaust gas pathway 102 (upstream side with respect to the first economizer 11A positioned most upstream).

The blowing machine mechanism 30 is, for example, an axial fan, includes a motor 31 and a propeller 32 connected to a rotation shaft 31A of the motor 31, and is configured so that the propeller 32 is rotated by rotational drive of the motor 31. The blowing machine mechanism 30 is stored in a tube of the fifth exhaust gas pathway 105 in a state in which the rotation shaft 31A aligns with the flow direction of the exhaust gas as shown in FIG. 2. With the blowing machine mechanism 30, the exhaust gas flowing through the fifth exhaust gas pathway 105 can be sucked from an upstream side, and can be pressurized, and the pressurized exhaust gas can be discharged to a downstream side by rotating the propeller 32.

The motor 31 is configured to be driven by, in addition to a power supplied from an external power supply (not shown), the electric energy recovered by the recovery machine of the thermal energy recovery unit 10, namely the electric energy generated by the generator 16 as auxiliary power. In other words, the electric energy generated in the generator 16 can be used as driving energy for the blowing machine mechanism 30. It should be noted that the motor 31 may not use the electric energy generated in the generator 16, and may be driven only by the power supplied from the external power supply.

Though the heat of the exhaust gas can be used to generate the vapor by arranging the multiple economizers 11 in the course of the exhaust gas pathway 100 in the thermal energy recovery device 1, a pressure loss of the exhaust gas upon the passage through the economizers 11 poses a problem. Though the tubes 42 and 52 of the economizers 11 are illustrated in a simple manner in FIG. 2, the tubes 42 and 52 are arranged so as to actually occupy most parts of cross sections in the radial direction of the shells 41 and 51. Therefore, the flow of the exhaust gas may be disturbed due to the existence of the tubes 42 and 52 in the shells 41 and 51 of the respective economizers 11. As a result, the pressure loss of the exhaust gas increases, and smooth exhaustion of the exhaust gas to the outside of the ship may thus become difficult. Particularly, this problem becomes remarkable if multiple economizers 11 are arranged in series in the flow direction of the exhaust gas as in this embodiment.

In contrast, with the thermal energy recovery device 1 according to this embodiment, the pressure loss of the exhaust gas generated upon the passage through the respective economizers 11 can be compensated by arranging the blowing machine mechanism 30 in the exhaust gas pathway 100, and using the blowing machine mechanism 30 to pressurize the exhaust gas. As a result, the thermal energy of the exhaust gas can be recovered in each of the economizers 11, and the exhaust gas can smoothly be exhausted to the outside of the ship.

It should be noted that though a description is given of the axial blowing machine in which the exhaust gas linearly flows along the rotation shaft 31A as an example of the blowing machine mechanism in this embodiment, the configuration is not limited to this example. The blowing machine mechanism according to the present invention may be, for example, a centrifugal blowing machine (a sirocco fan, a turbo fun, or the like) in which pressurized exhaust gas is discharged radially outward or a diagonal flow blowing machine in which exhaust gas flows in a diagonal direction with respect to a rotation shaft of a fan. However, while the exhaust gas is discharged toward the inner surface of the exhaust gas pathway 100 in the centrifugal blowing machine or the diagonal flow blowing machine, the exhaust gas can be discharged along the direction of the extension of the exhaust gas pathway 100 in the axial blowing machine according to this embodiment, which is particularly preferred in terms of the decrease in the pressure loss. Further, the blowing machine mechanism according to the present invention is not limited to the fan, and a blower or a compressor that pressurizes the exhaust gas to a higher pressure than the fan may be employed.

Characteristics and actions/effects of the thermal energy recovery device 1 of the first embodiment described before will now be listed.

The thermal energy recovery device 1 is a device for recovering the thermal energy of the exhaust gas exhausted from the internal combustion engine. The thermal energy recovery device 1 includes the economizers 11 that are connected to the exhaust gas pathway 100 through which the exhaust gas flows and the heat medium pathways 12 through which the heat medium (water and vapor) flows, and carry out the heat exchange between the exhaust gas flowing from the exhaust gas pathway 100 and the heat medium (water) flowing from the heat medium pathways 12, to thereby heating the heat medium (water), the thermal energy recovery units 10 that is connected to the heat medium pathways 12, and recover the thermal energy of the heat medium (vapor) heated by the economizers 11, and the blowing machine mechanism 30 that is arranged in the exhaust gas pathway 100, and pressurizes the exhaust gas flowing through the exhaust gas pathway 100.

With the thermal energy recovery device 1, the heat medium (water) is heated through the heat exchange with the exhaust gas in the economizer 11, and the thermal energy of the heated heat medium (vapor) is recovered in the thermal energy recovery unit 10, thereby recovering the thermal energy of the exhaust gas exhausted from the internal combustion engine. On this occasion, when the exhaust gas exhausted from the internal combustion engine passes through the economizer 11, the pressure loss of the exhaust gas may increase. To address this problem, the thermal energy recovery device 1 can pressurize the exhaust gas by the blowing machine mechanism 30 arranged in the exhaust gas pathway 100, and the pressure loss of the exhaust gas generated upon the passage through the economizer 11 can thus be compensated. Thus, with the thermal energy recovery device 1, the thermal energy of the exhaust gas exhausted from the internal combustion engine can be recovered, and the exhaust gas can smoothly be exhausted to the outside of the ship.

In the thermal energy recovery device 1, the thermal energy recovery unit 10 includes the heater 13 that heats the working medium through the heat exchange between the heat medium (vapor) heated by the economizer 11 and the working medium, and the generator 16 (recovery machine), that recovers the energy of the working medium in the vapor state heated by the heater 13 as the electric energy. The thermal energy recovery device 1 is configured so that the electric energy (recovered by the recovery machine) generated by the generator 16 is used as the driving energy for the blowing machine mechanism 30. With this configuration, the power supplied from the external power supply to the blowing machine mechanism 30 can be decreased more by using the electric energy generated by using the thermal energy of the exhaust gas to drive the blowing machine mechanism 30.

In the thermal energy recovery device 1, the blowing machine mechanism 30 is arranged on the downstream side with respect to the third economizer 11C in the flow direction of the exhaust gas. With this configuration, the exhaust gas that has previously been provided for the heat exchange in the first to third economizers 11A, 11B, and 11C passes through the blowing machine mechanism 30, heat damage of the blowing machine mechanism 30 can be decreased more compared with a case where the exhaust gas at a high temperature immediately after the exhaustion from the internal combustion engine passes through the blowing machine mechanism 30.

In the thermal energy recovery device 1, the economizers 11 include the shells 41 and 51 that include the spaces 41D and 51D through which the exhaust gas passes and the tubes 42 and 52 that are arranged in the spaces 41D and 51D, and through which the heat medium (water and vapor) flows. The economizers 11 are connected to the exhaust gas pathway 100 so that the inner surfaces 41A and 51A of the shells 41 and 51 defining the spaces 41D and 51D flush with the inner surfaces 103A, 104A, and 105A of the exhaust gas pathway 100. With this configuration, the exhaust gas can be caused to smoothly flow at the connection portions between the economizers 11 and the exhaust gas pathway 100, and the pressure loss of the exhaust gas at the connection portions can thus be decreased.

In the thermal energy recovery device 1, the multiple economizers 11 are arranged in series in the flow direction of the exhaust gas. With this configuration, the thermal energy of the exhaust gas exhausted from the internal combustion engine can highly efficiently be recovered by using the multiple economizers 11 (first to third economizers 11A, 11B, and 11C). Moreover, the serial arrangement of the multiple economizers 11 is advantageous also in terms of space efficiency in the ship.

In the thermal energy recovery device 1, the exhaust gas is exhausted when the fuel oil A or the fuel oil C refined to the state in which the sulfur component is equal to or less than 2.0 mass% is combusted as the fuel in the internal combustion engine. In the thermal energy recovery device 1, the temperature of the exhaust gas flowing out from the third economizer 11C is lower than 130°C.

When the fuel oil A containing the sulfur component equal to or less than 2.0 mass% or the fuel oil C refined to the state in which the sulfur component is equal to or less than 2.0 mass% is used as the fuel, the sulfuric acid dew point of the exhaust gas exhausted from the internal combustion engine decreases. Therefore, even when the temperature of the exhaust gas flowing out from the third economizer 11C is decreased to a temperature less than 130°C, such a problem that the exhaust gas is liquefied, and the exhaust gas pathway 100 is thus corroded can be avoided.

### (Second embodiment)

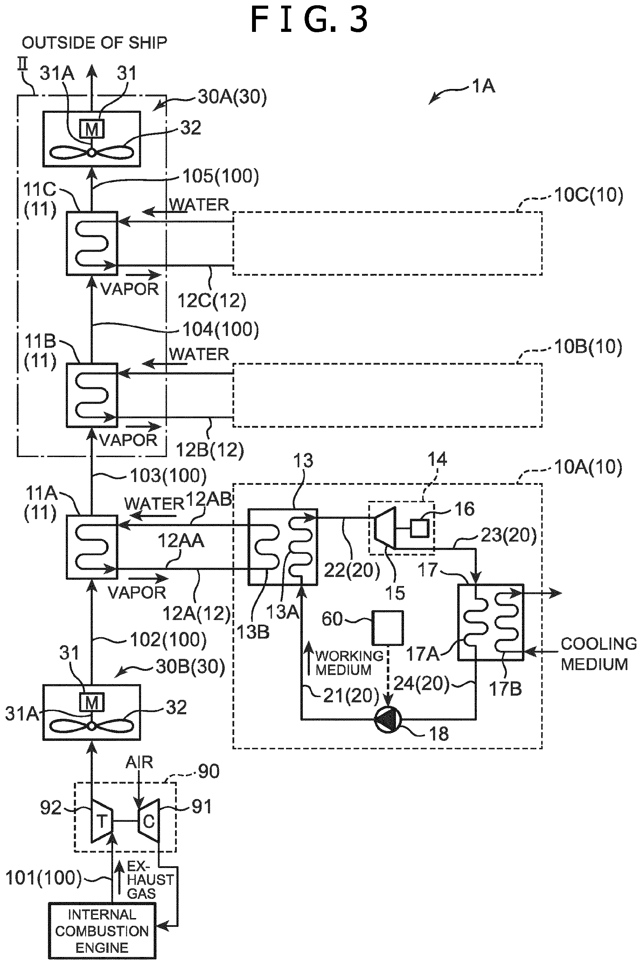

A description will now be given of a thermal energy recovery device 1A according to a second embodiment of the present invention with reference to FIG. 3. Though the thermal energy recovery device 1A according to the second embodiment basically has the same configuration as the thermal energy recovery device 1 according to the first embodiment, the thermal energy recovery device 1A is different from the first embodiment in such a point that multiple blowing machine mechanisms 30 are arranged in the exhaust gas pathway 100. A description will now be given of only the point different from the first embodiment.

Multiple (two) blowing machine mechanisms 30 (first blowing machine mechanism 30A and second blowing machine mechanism 30B) are arranged in the exhaust gas pathway 100 in the thermal energy recovery device 1A according to the second embodiment as shown in FIG. 3. The first blowing machine mechanism 30A is arranged in the fifth exhaust gas pathway 105 and the second blowing machine mechanism 30B is arranged in the second exhaust gas pathway 102 in the second embodiment. In other words, the second blowing machine mechanism 30B is arranged on an upstream side with respect to the first economizer 11A (most upstream economizer 11) in the flow direction of the exhaust gas, and the first blowing machine mechanism 30A is arranged on a downstream side with respect to the third economizer 11C (most downstream economizer 11) in the flow direction of the exhaust gas. Though the first and second blowing machine mechanisms 30A and 30B respectively have the same configurations, the first and second blowing machine mechanisms 30A and 30B may have configurations different from each other.

According to the second embodiment, the multiple blowing machine mechanisms 30 can be used to pressurize the exhaust gas, to thereby more surely compensate the pressure loss of the exhaust gas generated upon the passage through the economizers 11. It should be noted that the positions of the blowing machine mechanisms 30 are not limited to the positions shown in FIG. 3. For example, the blowing machine mechanism 30 may be arranged in the third exhaust gas pathway 103 (between the first economizer 11A and the second economizer 11B) or the fourth exhaust gas pathway 104 (between the second economizer 11B and the third economizer 11C). Moreover, three or more blowing machine mechanisms 30 may be arranged in the exhaust gas pathway 100.

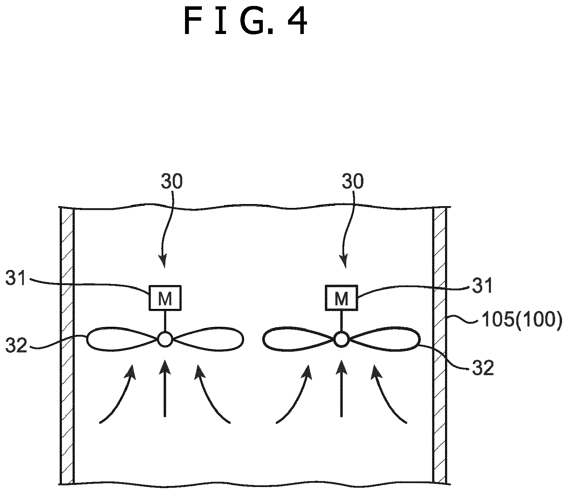

FIG. 4 shows an arrangement of the blowing machine mechanisms 30 in a variation of the second embodiment. The multiple (two) blowing machine mechanisms 30 may be arranged side by side in a widthwise direction (direction orthogonal to the flow direction of the exhaust gas) of the exhaust gas pathway 100 as shown in FIG. 4. In this case, even if the width of the exhaust gas pathway 100 is large, the blowing machine mechanisms 30 can be arranged in a most part of a flow passage area of the exhaust gas pathway 100, and the exhaust gas can be prevented from directly flowing downstream without the pressurization by the blowing machine mechanisms 30. Thus, the exhaust gas can surely be pressurized. Though the multiple blowing machine mechanisms 30 are arranged side by side in the widthwise direction in the fifth exhaust gas pathway 105 in FIG. 4, the multiple blowing machine mechanisms 30 may similarly be arranged in the widthwise direction in the second to fourth exhaust gas pathways 102, 103, and 104. Moreover, three or more blowing machine mechanisms 30 may be arranged side by side in the widthwise direction of the exhaust gas pathway 100.

### (Third embodiment)

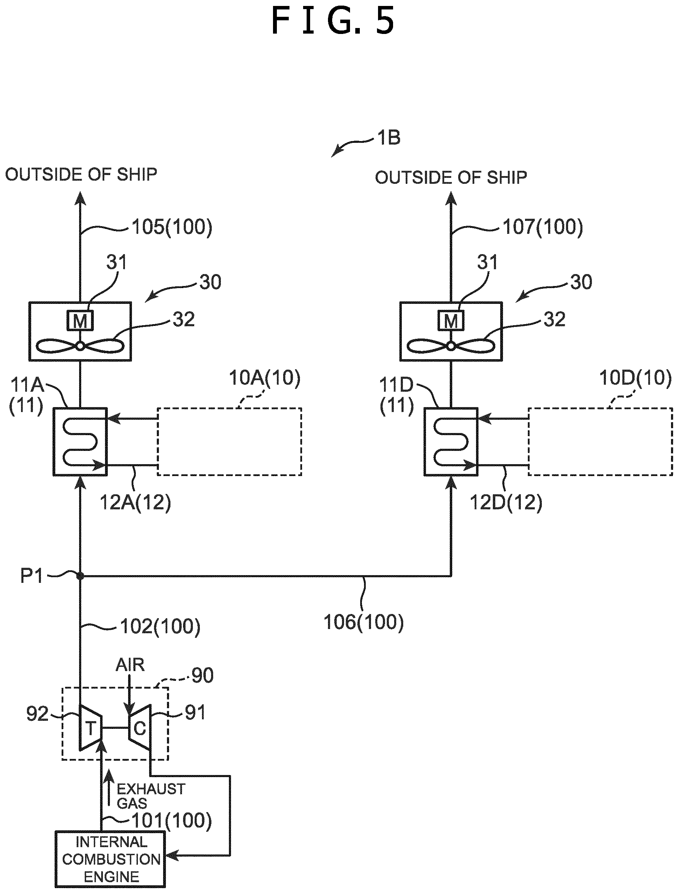

A description will now be given of a thermal energy recovery device 1B according to a third embodiment of the present invention with reference to FIG. 5. Though the thermal energy recovery device 1B according to the third embodiment basically has the same configuration as the thermal energy recovery device 1 according to the first embodiment, the thermal energy recovery device 1B is different from the first embodiment in such a point that multiple economizers 11 are arranged in parallel. A description will now be given of only the point different from the first embodiment.

The exhaust gas pathway 100 branches to multiple pathways in the third embodiment as shown in FIG. 5. More specifically, the exhaust gas pathway 100 includes a sixth exhaust gas pathway 106 that branches from an arbitrary point P1 in the second exhaust gas pathway 102, and leads the exhaust gas flowing from the second exhaust gas pathway 102 to a fourth economizer 11D and a seventh exhaust gas pathway 107 that leads the exhaust gas from the fourth economizer 11D to the outside of the ship. The exhaust gas pathway 100 branches to a pathway constructed of the first, second, and fifth exhaust gas pathways 101, 102, and 105 and a pathway constructed of the sixth and seventh exhaust gas pathways 106 and 107, and economizers 11 (the first economizer 11A and the fourth economizer 11D) are arranged in the respective branch pathways in this way in the third embodiment. It should be noted that the fourth economizer 11D has the same configuration as the first to third economizers 11A, 11B, and 11C. Moreover, a fourth thermal energy recovery unit 10D is connected to the fourth economizer 11D via a fourth heat medium pathway 12D, and has the same configuration as the first to third thermal energy recovery units 10A, 10B, and 10C.

The blowing machine mechanisms 30 are respectively arranged in the fifth and seventh exhaust gas pathways 105 and 107 on downstream sides of the two economizers 11. It should be noted that the positions of the blowing machine mechanisms 30 are not limited to the positions shown in FIG. 5, and the blowing machine mechanism 30 may be arranged at a position on an upstream side with respect to the point P1 (namely, a position on an upstream side with respect to the branch point) in the second exhaust gas pathway 102, for example.

With the thermal energy recovery device 1B according to the third embodiment, the pressure loss of the exhaust gas can be decreased more by arranging the multiple economizers 11 in parallel than the case where the multiple economizers 11 are arranged in series. Moreover, the exhaust gas can more smoothly be exhausted to the outside of the ship by arranging the blowing machine mechanism 30 in each of the branch pathways.

It should be noted that the exhaust gas pathway 100 may branch to three or more pathways, and each of three or more economizers 11 is arranged in each of the branch pathways in such a case. Moreover, though a description is given of the case where the one economizer 11 is arranged in each of the branch pathways in the form of FIG. 5, multiple economizers 11 may be arranged in series in each of the branch pathways. In other words, the multiple economizers 11 may be arranged in a form of a combination of the serial arrangement and the parallel arrangement.

### (Other embodiment)

Finally, a description will now be given of a thermal energy recovery device according to another embodiment of the present invention.

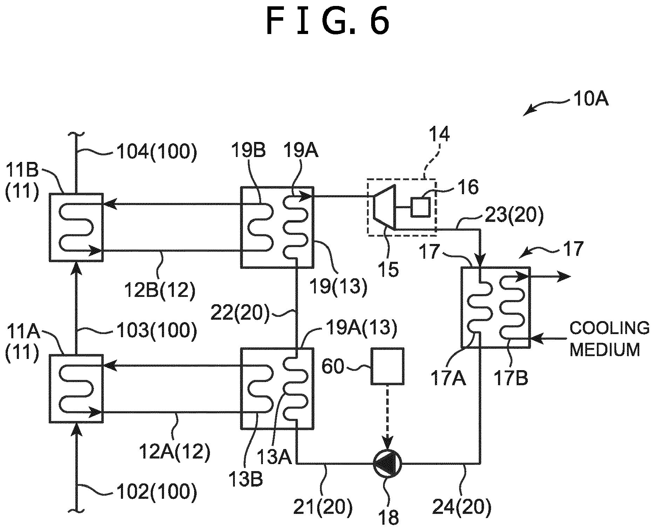

Though the vapor generated by the first and second economizers 11A and 11B are fed to the respective thermal energy recovery units (first and second thermal energy recovery units 10A and 10B) different from each other in the first embodiment shown in FIG. 1, the configuration is not limited to this example. The first thermal energy recovery unit 10A may include an evaporator 19A and a superheater 19 arranged on a downstream side of the evaporator 19A serving as the heater 13 as shown in FIG. 6. Vapor generated by the first economizer 11A may be fed via the first heat medium pathway 12A to the evaporator 19A, and vapor generated by the second economizer 11B may be fed via the second heat medium pathway 12B to the superheater 19. Moreover, a heat source (such as vapor used in the ship) other than the vapor generated by the economizer 11 may be supplied to the evaporator 19A, and the vapor generated by the economizer 11 may be supplied to the superheater 19 in the form of FIG. 6.

Though a description is given of the cases where the multiple economizers 11 are provided in the first to third embodiments, the configuration is not limited to these examples, and only one economizer 11 may be provided.

Though a description is given of the case where the vapor is generated in all of the first to third economizers 11A, 11B, and 11C in the first embodiment, the configuration is not limited to this example. For example, while the vapor may be generated by the heat of the exhaust gas in the first and second economizers 11A and 11B, hot water may be generated by the heat of the exhaust gas in the third economizer 11C.

Though a description is given of the water as an example of the heat medium in the first embodiment, the heat medium is not limited to the water, and other heat media such as heat transfer oil and various refrigerants may be used.

Though a description is given of the case where the thermal energy recovery unit 10 is a binary generation device that evaporates the working medium through the vapor, and recovers the electric energy in the first embodiment, the configuration is not limited to this example. For example, the vapor generated by the economizer 11 may be supplied to a steam turbine for the ship, or may directly be supplied to a destination of needs in the ship such as a soot blow device, and may be used to clean a ballast tank, a cargo room, or a deck. They are forms of the thermal energy recovery of the vapor.

Though, a description is given of the case where the thermal energy of the exhaust gas exhausted from the diesel engine (internal combustion engine) for the ship propulsion is recovered in the first embodiment, the configuration is not limited to this example, and the application may include thermal energy recovery for exhaust gas exhausted from a gasoline engine, for example.

The embodiments disclosed herein should be considered as illustrative and not limitative in any respects. The scope of the present invention is prescribed not by the above description but by the scope of claims, and it is intended to include all changes within connotation and scope equivalent to the scope of claims.

Provided is a thermal energy recovery device enabling recovery of thermal energy of exhaust gas exhausted from an internal combustion engine, and smooth exhaustion of the exhaust gas to an outside. The thermal energy recovery device includes an economizer connected to an exhaust gas pathway through which the exhaust gas exhausted from the internal combustion engine flows and a heat medium pathway through which a heat medium flows, and heating the heat medium through heat exchange between the exhaust gas flowing into from the exhaust gas pathway and the heat medium flowing into from the heat medium pathway, a thermal energy recovery unit connected to the heat medium pathway, and recovering thermal energy of the heat medium heated by the economizer, and a blowing machine mechanism arranged in the exhaust gas pathway, and pressurizing the exhaust gas flowing through the exhaust gas pathway.

## Claims

1. A thermal energy recovery device for recovering thermal energy of exhaust gas exhausted from an internal combustion engine, comprising:
an economizer that is connected to an exhaust gas pathway through which the exhaust gas flows and a heat medium pathway through which a heat medium flows, and heats the heat medium through heat exchange between the exhaust gas flowing into from the exhaust gas pathway and the heat medium flowing into from the heat medium pathway;
a thermal energy recovery unit that is connected to the heat medium pathway, and recovers thermal energy of the heat medium heated by the economizer; and
a blowing machine mechanism that is arranged in the exhaust gas pathway, and pressurizes the exhaust gas flowing through the exhaust gas pathway.

2. The thermal energy recovery device according to claim 1,
wherein the thermal energy recovery unit comprises:
a heater that heats a working medium through heat exchange between the heat medium heated by the economizer and the working medium; and
a recovery machine, that recovers energy of the working medium in a vapor state heated by the heater as electric energy, and
wherein the thermal energy recovery device is configured so that the electric energy recovered by the recovery machine is used as driving energy for the blowing machine mechanism.

3. The thermal energy recovery device according to claim 1 or 2, wherein the blowing machine mechanism is arranged on a downstream side with respect to the economizer in a flow direction of the exhaust gas.

4. The thermal energy recovery device according to any one of claims 1 to 3,
wherein the economizer comprises a shell that includes a space through which the exhaust gas passes and a tube that is arranged in the space, and through which the heat medium flows, and
wherein the economizer is connected to the exhaust gas pathway so that an inner surface of the shell defining the space flushes with an inner surface of the exhaust gas pathway.

5. The thermal energy recovery device according to any one of claims 1 to 4, wherein a plurality of the blowing machine mechanisms are arranged.

6. The thermal energy recovery device according to claim 5, wherein the plurality of blowing machine mechanisms are arranged side by side in a widthwise direction of the exhaust gas pathway.

7. The thermal energy recovery device according to any one of claims 1 to 6, wherein a plurality of the economizers are arranged in series in a flow direction of the exhaust gas.

8. The thermal energy recovery device according to any one of claims 1 to 6,
wherein the exhaust gas pathway branches to a plurality of pathways, and
wherein the economizer is arranged in each of the plurality of pathways.

9. The thermal energy recovery device according to any one of claims 1 to 8,
wherein the exhaust gas is exhausted when either one of fuel oil A prescribed in JIS K 2205 and fuel oil C prescribed in JIS K 2205 and refined to a state in which a sulfur component is equal to or less than 2.0 mass% is combusted as a fuel in the internal combustion engine, and
wherein the temperature of the exhaust gas flowing out from the economizer is lower than 130°C.
